Europäisches Patentamt

European Patent Office

Office européen des brevets

(11) Numéro de publication : **0 471 630 A1**

# (12) DEMANDE DE BREVET EUROPEEN

(21) Numéro de dépôt : **91420298.1**

(51) Int. Cl.$^5$ : **B60R 16/02**

(22) Date de dépôt : **14.08.91**

(30) Priorité : **16.08.90 FR 9010606**

(43) Date de publication de la demande :
**19.02.92 Bulletin 92/08**

(84) Etats contractants désignés :
**DE DK ES GB IT NL SE**

(71) Demandeur : **Greillier, Bernard**
**38, Avenue des Frères Lumière**
**F-69008 Lyon (FR)**

(72) Inventeur : **Greillier, Bernard**
**38, Avenue des Frères Lumière**
**F-69008 Lyon (FR)**

(74) Mandataire : **Ropital-Bonvarlet, Claude**
**Cabinet Beau de Loménie B.P. 7073**
**F-69341 Lyon Cedex 07 (FR)**

(54) **Equipement pour l'alimentation électrique d'organes disposés à bord d'un véhicule.**

(57) Cet équipement comprend :
— un faisceau (4) de deux conducteurs électriques isolés l'un de l'autre, disposés à l'intérieur du véhicule (1) et raccordés chacun par ses extrémités à une borne de la source de tension (2) ;
— au moins un boîtier de connexion (10) comprenant deux éléments conducteurs (12, 13), aptes à être mis et maintenus chacun en contact avec l'un des conducteurs électriques (5, 6) précités en un point quelconque de ceux-ci et comportant des moyens de connexion (35) d'au moins un organe (3) à commander aux éléments conducteurs (5, 6) précités.
Notamment destiné à équiper des bateaux.

EP 0 471 630 A1

# FIG.1

La présente invention concerne le domaine technique général des sytèmes ou équipements conçus pour assurer la distribution d'une énergie électrique à une série d'organes à commander disposés à bord d'un véhicule, du type dans lequel est embarquée une source de tension, de préférence continue.

L'invention trouve une application particulièrement avantageuse dans le domaine de l'équipement d'un bateau.

Dans l'application préférée énoncée ci-dessus, chaque type de bateau comporte un plan de câblage électrique permettant de transmettre l'énergie d'une batterie à différents organes à commander disposés à bord, tels que, par exemple, une pompe de cale, des feux de signalisation, des lampes d'éclairage localisées d'une zone intérieure, divers indicateurs de marche et des enrouleurs de câbles.

Ces divers organes à commander, qui sont reliés individuellement à la batterie par des câbles électriques, sont également connectés, en général, à un tableau de commande centralisé permettant de connaître l'état de fonctionnement de ces différents organes. Un plan de câblage est donc attribué à chaque type de bateau avant sa construction, en considération des différents équipements prévus à bord.

Si avant le début de la fabrication proprement dite du bateau, des organes à commander additionnels doivent être montés à son bord, des conducteurs électriques supplémentaires doivent être prévus pour raccorder ces organes à la batterie ainsi qu'au tableau de commande.

De même, si des organes à commander sont à monter après la fabrication du bateau, il convient de rajouter des conducteurs électriques pour les relier à la source d'énergie et au tableau de commande. De même, une modification de la position des organes conduit à une modification du plan de câblage électrique. En pratique, il apparaît que toute nouvelle modification conduit, préalablement à la construction, à des difficultés de mise en oeuvre et à des augmentations non négligeables de coût et de fabrication, et, postérieurement à la construction, à des difficultés techniques particulièrement aiguës pour le passage des différents conducteurs électriques supplémentaires.

La présente invention vise à remédier à ces inconvénients en proposant un équipement assurant l'alimentation d'une série d'organes à commander, disposés à bord d'un véhicule dans lequel est embarquée une source de tension adaptée pour permettre toute modification de câblage avant et/ou après la fabrication du véhicule.

La présente invention vise, également, à proposer un équipement assurant la commande des différents organes à partir d'un tableau de commande permettant, en outre, de connaître l'état de fonctionnement des organes.

Pour atteindre les buts ci-dessus, l'équipement selon l'invention comprend :

— un faisceau de deux conducteurs électriques isolés l'un de l'autre, disposés à l'intérieur du véhicule et raccordés chacun par ses extrémités à une borne de la source de tension ;

— au moins un boîtier de connexion comprenant deux éléments conducteurs, aptes à être mis et maintenus chacun en contact avec l'un des conducteurs électriques précités en un point quelconque de ceux-ci et comportant des moyens de connexion d'au moins un organe à commander aux éléments conducteurs précités.

Grâce à la possibilité de montage et de positionnement des boîtiers en un point quelconque des conducteurs électriques précités, une modification du câblage avant ou après la construction du véhicule peut être réalisée de manière particulièrement simple, rapide et commode.

Avantageusement, en parallèle des conducteurs électriques précités, sont prévues au moins deux fibres optiques, connectées à un tableau de commande du fonctionnement des différents organes que comprend le véhicule ainsi qu'aux différents boîtiers de connexion et qui sont affectées, une, au transport de données émises par le tableau pour la commande des organes et une autre, au transport vers le tableau de données relatives à l'état de fonctionnement émises par des moyens prévus à cet effet que comprend chaque boîtier de connexion, ces derniers comprenant, en outre, chacun des moyens de décodage des données émises par le tableau pour le pilotage du fonctionnement des organes à commander ainsi que des moyens de détection du non fonctionnement de ceux-ci.

Les données émises par le tableau et transmises par l'une des fibres optiques sont décodées par les moyens de décodage du boîtier de connexion de l'organe concerné, qui est commandé en fonctionnement. En cas de détection du fonctionnement de ce dernier, des données en conséquence sont transmises par l'autre fibre optique au tableau, qui fera apparaître l'information sur son écran. En cas de détection de sur-et/ou sous-intensités liées au non fonctionnement de l'organe, d'autres données sont transmises par l'autre fibre optique au tableau, qui fera apparaître sur son écran l'information correspondante.

De toute façon, l'invention sera bien comprise à l'aide de la description qui suit, en référence au dessin schématique annexé représentant, à titre d'exemple non limitatif, une forme de réalisation préférée de l'équipement qu'elle concerne.

Figure 1 en est une vue en coupe longitudinale adaptée sur un bateau ;

Figure 2 est une vue en perspective de l'un de ses sous-ensembles ;

Figure 3 est une vue en coupe transversale de celui-ci avant montage selon III-III de figure 2 ;

Figure 4 en est une vue analogue à la figure 3 en position montée, et

Figure 5 est un schéma-blocs permettant d'expliciter le fonctionnement de certains moyens que l'équipement comprend.

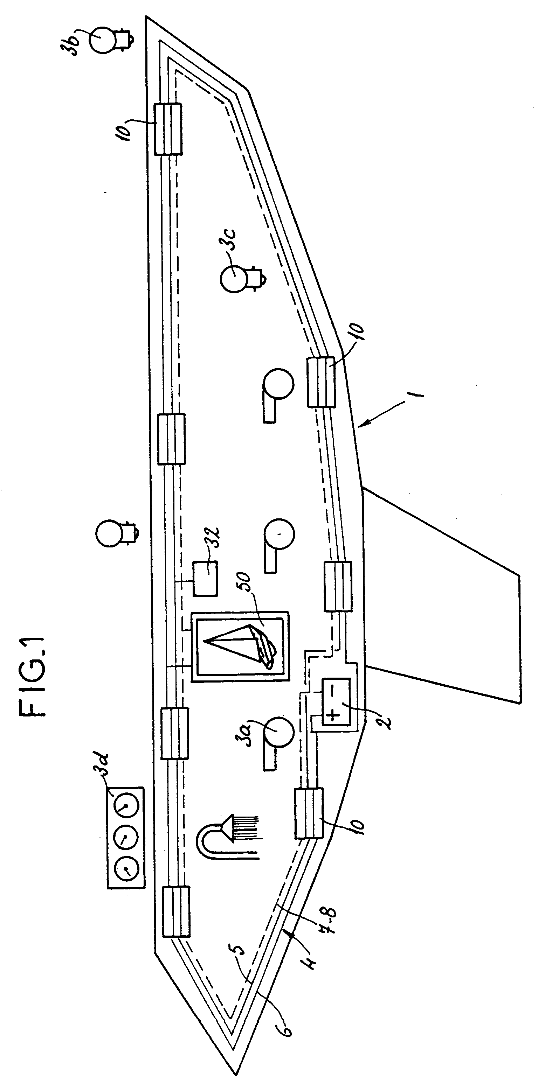

La figure 1 représente un bateau 1 comportant l'équipement selon l'invention. Ce dernier permet d'assurer la distribution d'une énergie électrique à partir d'une source de tension 2, telle qu'une batterie, à différents organes 3, tels qu'une pompe de cale 3a, des feux de signalisation 3b, des lampes d'éclairage d'intérieur 3c, des indicateurs de marche du bateau 3d dont la commande du fonctionnement est opérée à partir d'un tableau de commande centralisée 50.

L'équipement selon l'invention comporte un faisceau de distribution 4 comprenant deux conducteurs d'énergie électrique 5 et 6 isolés l'un de l'autre, disposés à l'intérieur du bateau 1 en suivant son profil et raccordés chacun par ses extrémités à une borne de la batterie 2. Par exemple, le conducteur 5 part de la borne négative de la batterie 2 et revient à cette même borne tandis que le conducteur 6 part de la borne positive et revient à cette borne positive.

En parallèle des conducteurs 5 et 6, le faisceau 4 comprend, aussi, deux fibres optiques 7 et 8 connectées au tableau de commande 50 ainsi qu'aux différents boîtiers 10 de connexion des organes 3 au faisceau 4.

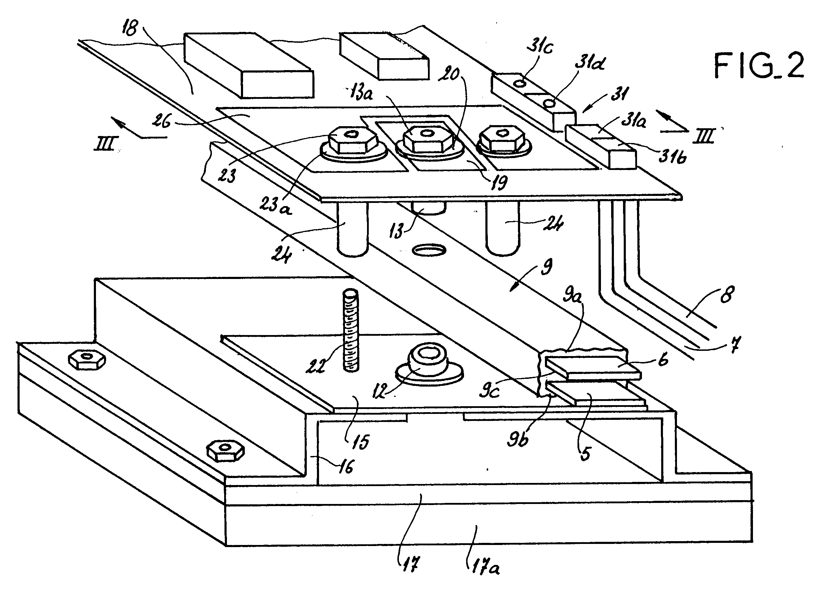

Les figures 2 à 4 représentent plus particulièrement une partie d'un boîtier 10. Les deux conducteurs d'énergie électrique 5, 6 sont constitués chacun par une barre noyée dans un revêtement d'isolation électrique 9 formant ainsi un câble étanche et isolé électriquement vis-à-vis de l'extérieur. Les deux barres conductrices 5, 6, qui sont isolées électriquement entre elles, sont réalisées en cuivre nickelé. Un tel câble comporte donc deux couches de protection extérieures 9a, 9b enveloppant les deux conducteurs 5 et 6 qui sont séparés par une couche intermédiaire isolante 9c.

Chaque boîtier 10 comporte un dispositif 11 de prélèvement d'énergie comportant deux parties I, II équipées chacune de vis 12, 13 conformées pour permettre un percement du revêtement d'isolation électrique 9.

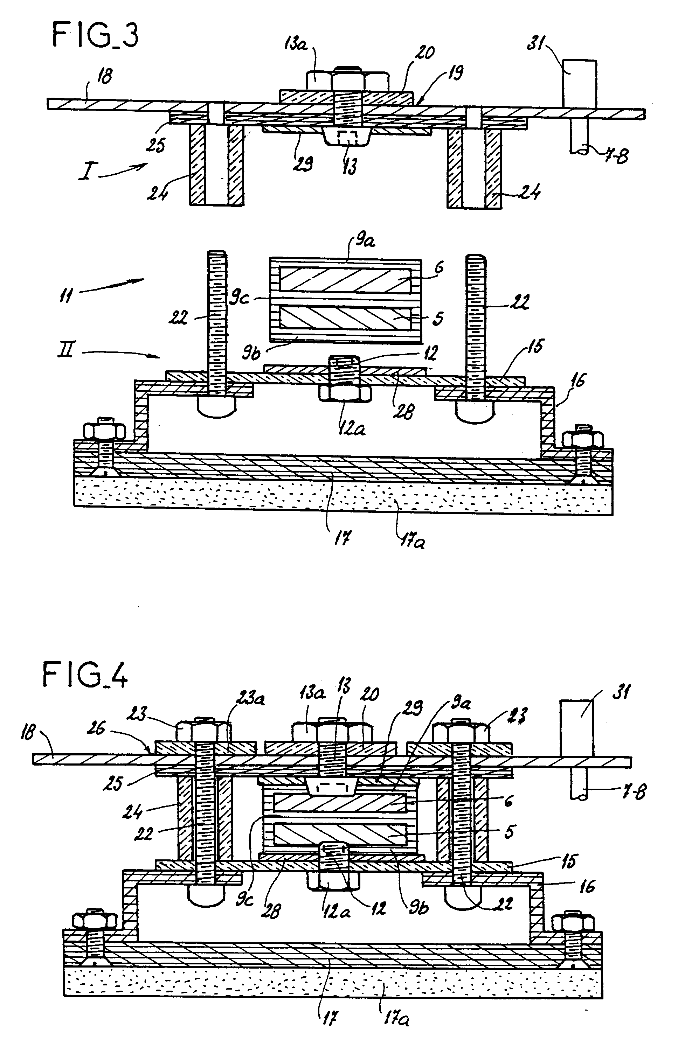

La partie I est composée d'une plaque conductrice 15 pourvue de la vis 12 et supportée par des équerres de fixation 16 montées sur une semelle 17 destinée à être assemblée à une structure porteuse fixe, par l'intermédiaire d'un patin de fixation 17a. La partie II comporte une carte de support électronique 18 pourvue d'une zone conductrice 19 montée en contact électrique avec la vis 13. La vis 12 coopère avec un écrou de serrage 12a tandis que la vis 13 est associée à un écrou 13a venant en contact avec la zone 19, par l'intermédiaire d'une rondelle 20. Les deux parties I et II du dispositif de prélèvement sont destinées à venir de part et d'autre du câble conducteur, de manière que les vis 12 et 13 se trouvent en regard l'une de l'autre (figure 3).

Le dispositif de prélèvement 11 comporte des vis 22 pour permettre le rapprochement mutuel des deux parties I, II pour assurer le percement du revêtement d'isolation, par les vis 12, 13 afin qu'elles se trouvent en contact électrique avec un conducteur, respectivement 5 et 6 (figure 4), et soient maintenues dans cette position. Les vis 22 sont portées par la plaque 15, avec laquelle elles sont en contact, et destinées à coopérer chacune avec un écrou 23 de serrage en contact électrique avec la carte 18 par l'intermédiaire d'une rondelle 23a.

Une entretoise 24 est engagée sur chaque vis 22 et interposée entre la plaque conductrice 15 et une plaque isolante 25 portée par la carte 18. L'entretoise 24 constitue une butée de limitation de rapprochement des deux parties, de manière que, dans cette position, les vis 12 et 13 viennent en contact et pénètrent partiellement dans le conducteur correspondant 5 ou 6.

Les vis 22 permettent de transférer l'énergie électrique vers une zone conductrice 26 ménagée sur la carte 18 par l'intermédiaire des deux rondelles 23a associées aux écrous 23. Il apparaît donc possible de disposer des deux polarités électriques sur la carte électronique 18, grâce aux zones 19 et 26.

Tel que cela apparaît plus précisément sur la figure 4, chaque vis 12 et 13 est munie, à sa périphérie, d'un joint d'étanchéité 28, 29 destiné à coopérer avec le revêtement d'isolation 9.

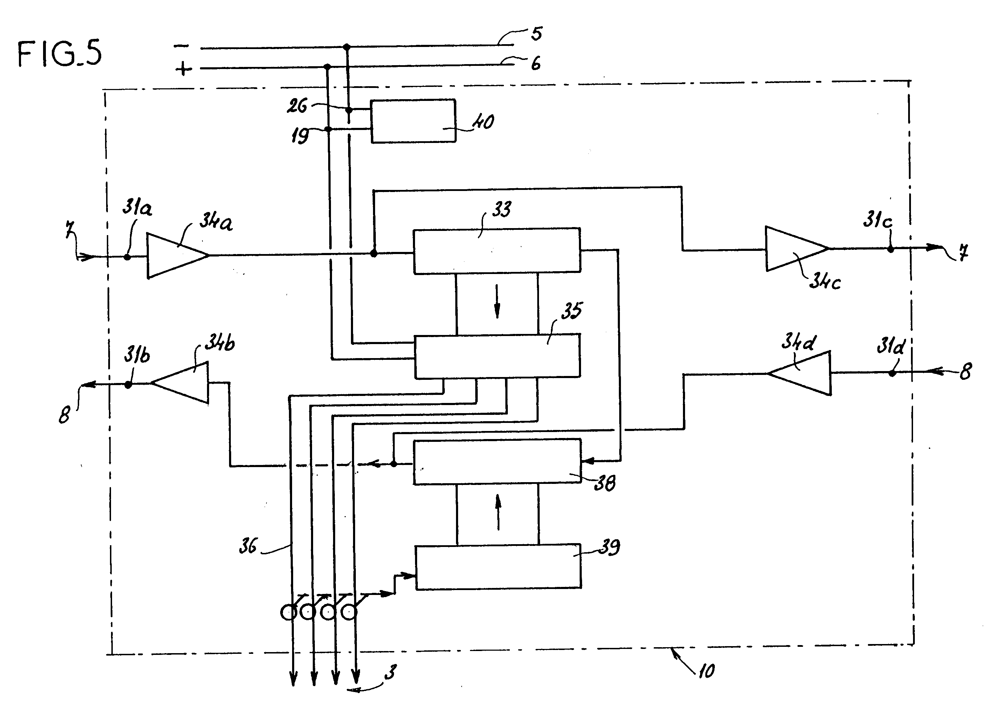

Le boîtier de connexion 10 comporte également un connecteur 31 d'entrée et de sortie des fibres optiques 7, 8. Tel que cela ressort plus précisément des figures 2 et 5, ce connecteur optique, de tout type connu en soi, porte deux bornes d'entrée 31a, 31b raccordées respectivement aux fibres 7, 8 et deux bornes de sortie 31c, 31d raccordées respectivement aux fibres optiques 7, 8 ainsi que, par l'intermédiaire de ces dernières, à un connecteur 31 d'un autre boîtier 10. Il doit être considéré que les fibres 7 et 8, arrivant sur les bornes 31a, 31b, sont connectées à une unité centrale 32 faisant partie du tableau de commande 50 (figure 1).

Tel que cela est schématisé par la figure 5, le boîtier 10 comporte, monté sur la carte 18, des moyens 33 de décodage d'adresses et de données connectés à la borne d'entrée 31a du connecteur, par l'intermédiaire d'un étage d'amplification 34a. La sortie de cet étage 34a est reliée, également, directement à l'entrée d'un étage d'amplification 34c relié à la borne de sortie 31c, de manière à autoriser la transmission directe du signal optique aux boîtiers montés en aval par rapport à l'unité centrale 32 lorsque l'ordre de commande, sélectionné sur le tableau 50 et émis par celle-ci, n'est pas destiné au boîtier 10 considéré.

Les moyens de décodage d'adresses et de données 33, tels qu'un décodeur série parallèle, ont pour fonction, lorsque l'ordre de commande précité leur est destiné, de piloter des moyens de connexion 35, tel qu'un ensemble amplificateur-relais, connectés, d'une part, aux conducteurs 5, 6 par l'intermédiaire des zones conductrices 19 et 26 de la carte électronique 18, et d'autre part à l'organe 3 correspondant par l'intermédiaire de quatre relais qu'il comporte, connectés chacun à un câble 36 à deux fils reliés à l'organe 3 à commander.

Si le mot d'adresse envoyé par l'unité centrale 32 sur la fibre optique 7 ne correspond pas à l'adresse du boîtier, le décodeur 33 ne pilote pas les moyens 35 associés et le mot adresse est transmis directement à l'étage d'amplification 34c pour commander le boîtier de raccordement 10 suivant.

Le décodeur 33 est également relié à des moyens 38 de codage de données et d'adresses, qui sont reliés, par l'intermédiaire d'un étage amplificateur 34b, à la borne 31b de la fibre optique de réémission 8. L'entrée de l'étage d'amplification 34b est connectée également directement à la sortie d'un étage d'amplification 34d dont l'entrée est reliée à la borne 31d destinée à être raccordée à un autre boîtier de connexion 10.

Les moyens de codage 38 sont pilotés par un système 39 de détection de sur-et/ou de sous-intensités susceptibles d'intervenir sur les câbles de liaison 36 en cas du non fonctionnement des organes 3. Les moyens de codage 38, tels qu'un codeur parallèle série, permettent donc de transmettre à l'unité centrale 32 l'adresse du boîtier, ainsi que l'état de fonctionnement des organes à commander. Dans les autres boîtiers 10, ces données transitent directement de la borne 31d à la borne 31b.

Bien entendu, les divers composants électroniques, tels que des amplificateurs 34, le décodeur 33, le codeur 38, le système 39 et les moyens de connexion 35, sont alimentés électriquement par l'intermédiaire d'un circuit de régulation 40 relié aux zones 19, 26 de la carte.

L'équipement conforme à l'invention permet donc la distribution d'énergie électrique à des organes à commander à l'aide de boîtiers de raccordement présentant un montage aisé et possible à tout moment avant la construction du bateau. Bien entendu, un tel équipement permet de rajouter des organes à commander supplémentaires en montant simplement, sur le faisceau 4, des boîtiers de raccordement 10. De plus, la combinaison d'un câble électrique, associé à des fibres optiques, permet de commander et de connaître à tout moment l'état de fonctionnement de ses organes.

L'équipement selon l'invention autorise donc une modification à tout moment du plan de câblage d'un bateau.

**Revendications**

1 - Equipement pour l'alimentation d'une série d'organes à commander (3) disposés à bord d'un véhicule, comportant :
- un faisceau de distribution composé de deux conducteurs d'énergie électrique (5, 6) isolés électriquement l'un de l'autre et d'au moins deux câbles de transmission de données,
- et au moins un boîtier de connexion (10) comprenant un dispositif (11, 12, 13) de perforation de l'isolant électrique des deux conducteurs pour prélever l'énergie électrique et des moyens (35) établissant une connexion entre les conducteurs électriques (5, 6) et les organes à commander (3),
    caractérisé en ce que :
- les deux conducteurs électriques constituent chacun une boucle raccordée à l'une des bornes d'une source de tension (2) embarquée,
- les deux câbles de transmission sont constitués par des fibres optiques (7, 8) dont l'une est affectée à l'émission de données délivrées par un tableau (50) de commande du fonctionnement des organes (3) et dont l'autre est affectée à la réception de données relatives à l'état de fonctionnement des organes (3), et en ce que :
- le boîtier de connexion (10) comporte :
    . un connecteur d'entrée (31a, 31d) et un connecteur de sortie (31b, 31c) pour chacune des fibres optiques,
    . des moyens (33) de décodage d'adresses et de données émises par le tableau (50), destinés à piloter les organes (3),
    . et des moyens (38) de codage de données et d'adresses montés sur la fibre de réception et commandés par un système (39) de détection du fonctionnement ou non des organes (3).

2 - Equipement selon la revendication 1, caractérisé en ce qu'en parallèle des conducteurs électriques (5, 6) précités, sont prévues au moins deux fibres optiques (7, 8), connectées à un tableau de commande (50) du fonctionnement des différents organes (3) que comprend le véhicule (1) ainsi qu'aux différents boîtiers de connexion (10) et qui sont affectées, l'une, au transport de données émises par le tableau (50) pour la commande des organes (3) et l'autre, au transport vers le tableau (50) de données relatives à l'état de fonctionnement émises par des moyens (38) prévus à cet effet que comprend chaque boîtier de connexion (10), ces derniers comprenant, en outre, chacun des moyens de décodage (33) des données émises par le tableau (50) pour le pilotage du fonctionnement des organes (3) à commander ainsi que des moyens de détection (39) du non fonctionnement de ceux-ci.

**3** - Equipement selon la revendication **1** ou **2**, caractérisé en ce que les éléments conducteurs (**12, 13**) aptes à être mis et maintenus en contact avec les conducteurs électriques (**5, 6**) sont conformés pour percer le revêtement d'isolation électrique de ceux-ci.

**4** - Equipement selon l'une des revendications **1** à **3**, caractérisé en ce que les moyens de maintien des éléments conducteurs (**12, 13**) en contact avec les conducteurs électriques sont eux-mêmes conducteurs.

**5** - Equipement selon la revendication **3** ou **4**, caractérisé en ce que les deux parties (**I, II**) du dispositif de prélèvement électrique incluant les éléments conducteurs (**12, 13**) sont limitées en rapprochement par des entretoises (**24**) qui, en position de butée, assurent le percement complet de chaque revêtement d'isolation des conducteurs (**5** et **6**) par l'élément correspondant pour permettre d'obtenir un contact électrique entre ces conducteurs (**5** et **6**) et ces éléments (**12, 13**).

**6** - Equipement selon l'une des revendications **1** à **4**, caractérisé en ce que chaque élément (**12, 13**) est muni, à sa périphérie, d'un joint d'étanchéité (**28, 29**) destiné à coopérer avec le revêtement d'isolation (**9**) des conducteurs électriques (**5, 6**).

**7** - Equipement selon la revendication **5**, caractérisé en ce que l'une des parties du dispositif de prélèvement est pourvue d'une carte électronique (**18**) de support des moyens de décodage (**33**), des moyens de connexion (**35**), du connecteur (**31**) d'entrée et de sortie des fibres optiques (**7, 8**) au boîtier (**10**), sur laquelle sont rapportées les polarités électriques.

**8** - Equipement selon l'une des revendications **2** à **7**, caractérisé en ce que chaque fibre optique (**7, 8**) comporte, en aval de son raccordement avec le connecteur (**10**), un étage d'amplification (**34a, 34d**) du signal.

**9** - Equipement selon la revendication **8**, caractérisé en ce que chaque fibre optique (**7, 8**) entrant et sortant d'un boîtier (**10**) est retenue directement entre les bornes d'entrée et de sortie du connecteur (**10**) par deux étages d'amplification (**34a** à **34d**) montés en série.

# FIG.1

FIG.2

# FIG_3

# FIG_4

FIG.5

Office européen
des brevets

**RAPPORT DE RECHERCHE EUROPEENNE**

Numero de la demande

EP  91 42 0298

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 283 012  (SUMITOMO ELECTRIC INDUSTRIES)<br>* Tout le document *<br>--- | 1,2-5,7 | B 60 R  16/02 |
| Y | DE-A-2 839 127  (BROWN, BOVERI & CIE)<br>* Tout le document *<br>--- | 1,2-5,7 | |
| A | PATENT ABSTRACTS OF JAPAN, vol. 7, no. 271 (M-260)[1416], 3 décembre 1983; & JP-A-58 149 834 (HITACHI SEISAKUSHO) 06-09-1983<br>* Tout le document *<br>--- | 2,8,9 | |
| A | PATENT ABSTRACTS OF JAPAN, vol. 7, no. 186 (E-193)[1331], 16 août 1983; & JP-A-58 88 942 (SUMITOMO DENKI KOGYO) 27-05-1983<br>* Tout le document *<br>--- | 8,9 | |
| A | GB-A-1 287 074  (FORD MOTOR CO.)<br>* Tout le document *<br>--- | 1,5,6 | **DOMAINES TECHNIQUES RECHERCHES (Int. Cl.5)** |
| A | FR-A-2 597 664  (SOCIETE NILED)<br>* Tout le document *<br>--- | 1,3,4,6 | B 60 R<br>H 01 R |
| A | FR-A-2 406 349  (FORD FRANCE)<br>* Page 1, ligne 1 - page 2, ligne 18; page 3, ligne 1 - page 6, ligne 36; page 7, lignes 14-40; revendications 1-5; figures 1-5 *<br>--- | 1,2 | |
| A | AUTOMOTIVE ENGINEERING, vol. 90, no. 8, août 1982, pages 44-46, US; "Fiber optics may eliminate wiring harnesses"<br>* Tout le document *<br>---                    -/- | 8,9 | |

Le présent rapport a été établi pour toutes les revendications

| Lieu de la recherche | Date d'achèvement de la recherche | Examinateur |
|---|---|---|
| LA HAYE | 04-10-1991 | GEYER J.L. |

EPO FORM 1503 03.82 (P0402)

**Office européen
des brevets**

# RAPPORT DE RECHERCHE EUROPEENNE

Numero de la demande

EP  91 42 0298

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EDN, vol. 25, no. 20, novembre 1980, pages 79-81, Boston, MA, US; T. ORMOND: "Fiber-optics/microcomputer combination replaces automotive wiring harnesses" * Tout le document * | 1,2 | |
| | --- | | |
| A | EP-A-0 131 450  (LUCAS) * Page 1, ligne 1 - page 2, ligne 10; page 5, ligne 23 - page 7, ligne 33; page 9, ligne 23 - page 14, ligne 26; revendications 1,4-7,10; figures 1,3 * | 1,2,8,9 | |
| | ----- | | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 04-10-1991 | GEYER J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)